# EUROPÄISCHE PATENTSCHRIFT

(11) **EP 3 036 107 B1**
(45) Veröffentlichungstag und Bekanntmachung des Hinweises auf die Patenterteilung: **26.09.2018**
(21) Anmeldenummer: 14748159.2
(22) Anmeldetag: 31.07.2014
(51) Int. Cl.: B41F 33/00, G01N 21/88, G01N 21/89

(54) **VORRICHTUNG ZUR DRUCKBILDBEOBACHTUNG**
DEVICE FOR PRINTED IMAGE OBSERVATION
DISPOSITIF D'OBSERVATION D'UNE IMAGE IMPRIMÉE

(30) Priorität: 23.08.2013 DE 102013216860; 24.01.2014 DE 102014201309
(43) Veröffentlichungstag der Anmeldung: 29.06.2016
(73) Patentinhaber: Windmöller & Hölscher KG, 49525 Lengerich (DE)
(72) Erfinder: THÖLE, Alois, 49536 Lienen (DE)
(86) Internationale Anmeldenummer: PCT/EP2014/066455
(87) Internationale Veröffentlichungsnummer: WO 2015/024753

(56) Entgegenhaltungen:
- EP-A1- 0 781 655
- EP-A2- 2 468 508
- WO-A1-2013/026792

## Beschreibung

Die Erfindung betrifft eine Vorrichtung zur Beobachtung einer laufenden und bedruckten Materialbahn während eines Druckprozesses, mit einer auf der Vorderseite der Materialbahn positionierten Lichtquelle zur Beleuchtung eines Beobachtungsabschnitts der Materialbahn, mit einer auf der Vorderseite der Materialbahn positionierten Kamera zur Aufnahme von stehenden Bildern der Materialbahn innerhalb des Beobachtungsabschnitts, und mit einer auf der Rückseite der Materialbahn und innerhalb des Beobachtungsabschnitts der Materialbahn positionierten lichtstreuenden Oberfläche.
Eine derartige Vorrichtung ist beispielsweise aus EP 0 781 655 B1 bekannt, in der eine Vorrichtung zur Druckbildbeobachtung beschrieben wird. Hinter der Materialbahn bzw. dem Bedruckstoff ist eine lichtstreuende Oberfläche montiert, wobei die Durckbild-Beobachtung mittels eines Video-Systems erfolgt. Als lichtstreuende Oberfläche wird eine diffus reflektierende Oberfläche in Weiß oder Grau vorgeschlagen.
Bei einer derartigen Vorrichtung besteht das Problem, dass Farbfehler oder Farbspritzer auf einer ansonsten durchsichtigen Materialbahn dann nicht erkannt werden können, wenn diese gerade der Farbe der diffus reflektierenden Oberfläche entsprechen.

Aufgabe der Erfindung ist es daher, eine Vorrichtung zur Druckbildbeobachtung zu schaffen, die Farbfehler ausnahmslos für jeden Druckauftrag auf einer ansonsten durchsichtigen Materialbahn erkennen kann.
Diese Aufgabe wird durch die Merkmale des Patentanspruchs 1 gelöst.

Die erfindungsgemäße Vorrichtung zur Beobachtung einer laufender und bedruckten Materialbahn während eines Druckprozesses, umfasst eine auf der Vorderseite der Materialbahn positionierte Lichtquelle zur Beleuchtung eines Beobachtungsabschnitts der Materialbahn, eine auf der Vorderseite der Materialbahn positionierte Kamera zur Aufnahme von stehenden Bildern der Materialbahn innerhalb des Beobachtungsabschnitts, und eine auf der Rückseite der Materialbahn und innerhalb des Beobachtungsabschnitts der Materialbahn positionierte lichtstreuende Oberfläche, wobei die lichtstreuende Oberfläche Elemente zur Steuerung der Farbe der lichtstreuenden Oberfläche aufweist, so dass die Farbe der lichtstreuenden Oberfläche geändert werden kann. Damit ist es möglich, für jeden Druckauftrag zur Druckbeobachtung einen Hintergrund mit der optimal passenden Farbe zu wählen. Es ist denkbar, dass die Auswahl der Farbe in Abhängigkeit des Druckbildes automatisch bzw. rechnergestützt erfolgt. Alternativ ist es aber auch möglich, dass die Farbumschaltung von einem Bediener manuell vorgenommen wird.
Ein wesentlicher Vorteil der Erfindung besteht darin, dass bei farbkritischen Motiven die Hintergrundfarbe zur Druckbildbeobachtung gewechselt werden kann. Ansonsten wäre es vielmehr erforderlich, dass ein zweites Video-System vor einem anders farbigen Hintergrund installiert wird, was gegenüber der erfinderischen Lösung mit erheblich mehr Kosten verbunden wäre.
Nach einer bevorzugten Ausführungsform ist eine Steuereinheit vorgesehen, die die von der Kamera erzeugten Bilder zur Kontrollierung der Qualität der Materialbahn auswertet.

Nach einer weiteren bevorzugten Ausführungsform ist vorgesehen, dass die lichtstreuende Oberfläche aus einem mehrfarbigen Endlosband besteht, das zwischen zwei Umlenkwalzen geführt wird.

Nach einer weiteren bevorzugten Ausführungsform ist vorgesehen, dass die lichtstreuende Oberfläche aus einer schwenkbaren Platte mit zwei verschieden farbigen Seiten besteht.

Nach einer weiteren bevorzugten Ausführungsform ist vorgesehen, dass die lichtstreuende Oberfläche von einer farbigen Flüssigkeit erzeugt wird, die in eine durchsichtige Kammer einfüllbar ist.

Nach einer weiteren bevorzugten Ausführungsform ist vorgesehen, dass die lichtstreuende Oberfläche aus einer Thermofarbbeschichtung besteht, deren Farbe in Abhängigkeit von der Temperatur veränderbar ist.

Nach einer weiteren bevorzugten Ausführungsform ist vorgesehen, dass die lichtstreuende Oberfläche aus einem schaltbaren LC-Glas und einer dahinter liegenden Farboberfläche besteht. Elektrochromes Glas nutzt die Eigenschaft von elektrochromen Materialien, den Lichtdurchlass je nach angelegter Gleichspannung zu ändern. LC-Glas oder PDLC-Glas (für liquid crystal bzw. polymer dispersed liquid crystal) bezeichnet Glas, das auf Knopfdruck opak wird. Dieser Vorgang ist reversibel.

Weitere Einzelheiten und Vorteile der Erfindung werden anhand der beigefügten Zeichnungen beschrieben. In diesen zeigen:
- Fig. 1: ein erstes Ausführungsbeispiel der Erfindung,
- Fig. 2: ein zweites Ausführungsbeispiel der Erfindung,
- Fig. 3: ein drittes Ausführungsbeispiel der Erfindung,
- Fig. 4: ein viertes Ausführungsbeispiel der Erfindung und
- Fig. 5: ein fünftes Ausführungsbeispiel der Erfindung,

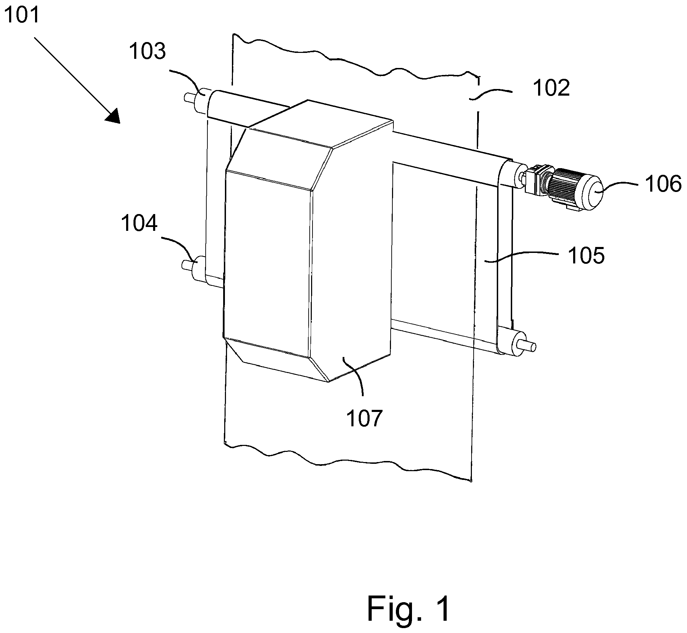

Fig. 1 zeigt ein erstes Ausführungsbeispiel der Erfindung mit einer erfindungsgemäßen Vorrichtung 101 zur Beobachtung einer laufenden Materialbahn 102. Die Vorrichtung 101 ist innerhalb eines Beobachtungsabschnitts positioniert, der geeignet ist, die Qualität der bedruckten Materialbahn 102 zu prüfen.

Hinter der Materialbahn 102 befinden sich zwei Umlenkrollen 103 und 104, über die ein Endlosband 105 geführt ist. Das Endlosband 105 verfügt über eine lichtstreuende Oberfläche und weist zwei oder mehrere Abschnitte mit verschiedenen Einfärbungen auf, so dass über den Antrieb 106 die Hintergrundfarbe innerhalb des Beobachtungsabschnitts geändert werden kann. Alternativ ist es auch denkbar, dass statt des Antriebs 106 ein manueller Antrieb, z.B. ein Handrad, vorgesehen ist.

Vor der Materialbahn 102 ist eine Kamera 107 zur Aufnahme von stehenden Bildern mit einer entsprechenden Lichtquelle positioniert.

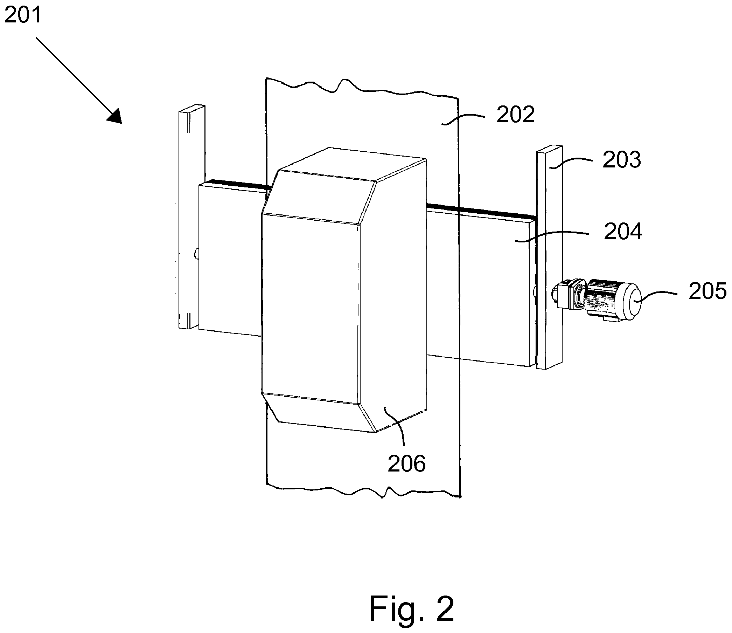

Fig. 2 zeigt ein zweites Ausführungsbeispiel der Erfindung mit einer erfindungsgemäßen Vorrichtung 201 zur Beobachtung einer laufenden Materialbahn 202. Die Vorrichtung 201 ist innerhalb eines Beobachtungsabschnitts positioniert, der geeignet ist, die Qualität der Materialbahn 202 zu prüfen.

Hinter der Materialbahn 202 befinden sich ein Gestell 203, in dem eine Platte 204 um eine horizontale Achse gelenkig gelagert ist. Die Platte 204 weist zwei verschieden farbige Seiten mit jeweils lichtstreuenden Oberflächen auf. Über den Antrieb 205 und ein nicht weiter gezeigtes Schwenkgetriebe kann die Platte 204 um die horizontale Achse verschwenkt werden, so dass die Hintergrundfarbe innerhalb des Beobachtungsabschnitts geändert werden kann. Alternativ ist es auch denkbar, dass statt des Antriebs 205 ein manueller Antrieb, z.B. ein Handrad, vorgesehen ist.

Vor der Materialbahn 202 ist eine Kamera 206 zur Aufnahme von stehenden Bildern mit einer entsprechenden Lichtquelle positioniert.

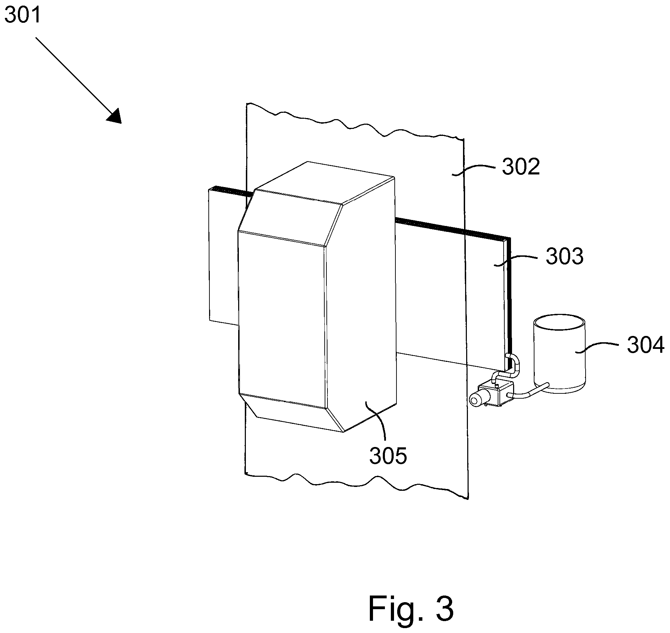

Fig. 3 zeigt ein drittes Ausführungsbeispiel der Erfindung mit einer erfindungsgemäßen Vorrichtung 301 zur Beobachtung einer laufenden Materialbahn 302. Die Vorrichtung 301 ist innerhalb eines Beobachtungsabschnitts positioniert, der geeignet ist, die Qualität der Materialbahn 302 zu prüfen.

Hinter der Materialbahn 302 befindet sich eine durchsichtige Kammer 303, deren Rückseite mit einer ersten Farbe (z. B. Grau) eingefärbt ist, so dass die Rückseite gegenüber der Vorderseite eine lichtstreuende Oberfläche bildet. Über die Pumpe 304 kann eine Flüssigkeit in die Kammer 303 eingefüllt werden, wobei die Flüssigkeit mit einer zweiten Farbe (z. B. Weiß) eingefärbt ist. Bei eingefüllter Flüssigkeit bildet nunmehr die Flüssigkeit die lichtstreuende Oberfläche. Durch erneutes Ablassen bzw. Befüllen der Kammer 303 kann damit die Hintergrundfarbe innerhalb des Beobachtungsabschnitts geändert werden.

Vor der Materialbahn 302 ist eine Kamera 305 zur Aufnahme von stehenden Bildern mit einer entsprechenden Lichtquelle positioniert.

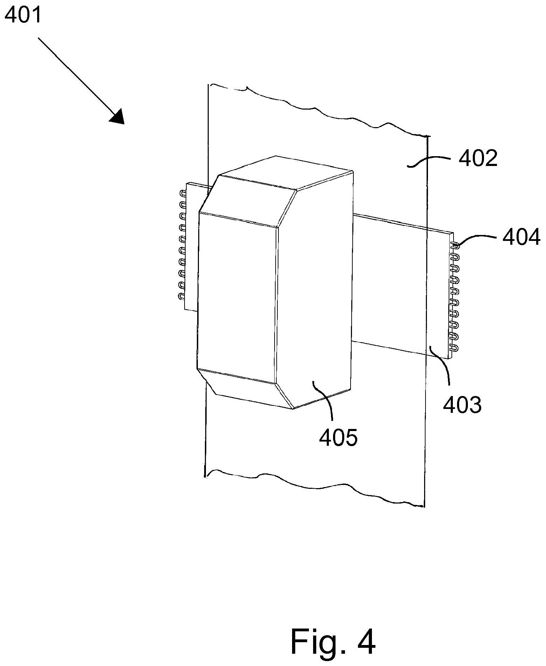

Fig. 4 zeigt ein viertes Ausführungsbeispiel der Erfindung mit einer erfindungsgemäßen Vorrichtung 401 zur Beobachtung einer laufenden Materialbahn 402. Die Vorrichtung 401 ist innerhalb eines Beobachtungsabschnitts positioniert, der geeignet ist, die Qualität der Materialbahn 402 zu prüfen.

Hinter der Materialbahn 402 befindet sich eine Platte 403. Die Platte 403 weist eine lichtstreuende Oberfläche mit einer Thermofarbbeschichtung auf. Innerhalb der Platte sind Peltier-Elemente 404 vorgesehen, die elektrisch ansteuerbar sind, so dass die Temperatur der Platte und damit auch die Oberflächenfarbe über die Ansteuerung der Peltier-Elemente 404 veränderbar ist.

Vor der Materialbahn 402 ist eine Kamera 405 zur Aufnahme von stehenden Bildern mit einer entsprechenden Lichtquelle positioniert.

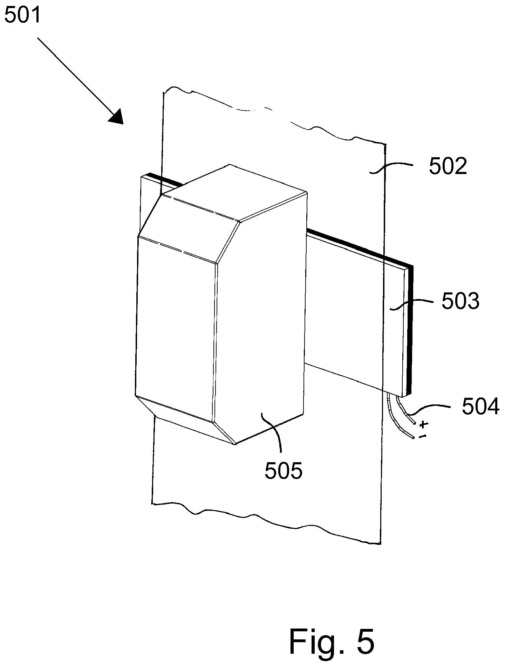

Fig. 5 zeigt ein fünftes Ausführungsbeispiel der Erfindung mit einer erfindungsgemäßen Vorrichtung 501 zur Beobachtung einer laufenden Materialbahn 502. Die Vorrichtung 501 ist innerhalb eines Beobachtungsabschnitts positioniert, der geeignet ist, die Qualität der Materialbahn 502 zu prüfen.

Hinter der Materialbahn 502 befindet sich eine Platte 503 aus schaltbarem LC-Glas oder PDLC-Glas (für liquid crystal bzw. polymer dispersed liquid crystal). Die LC-Glasplatte 503 weist auf der Rückseite eine Beschichtung mit einer lichtstreuenden Oberfläche in einer ersten Farbe (z. B. Grau) auf. Durch Anlegen einer Spannung an den Anschlüssen 504 kann die LC-Glasplatte 503 zwischen den Zuständen "lichtdurchlässig" und "lichtundurchlässig" hin- und hergeschaltet werden. Im lichtundurchlässigen Zustand erscheint die LC-Glasplatte 503 in einer zweiten Farbe (z. B. Weiß), so dass insgesamt die Hintergrundfarbe über eine Ansteuerung an den Anschlüssen 504 verändert werden kann.

Vor der Materialbahn 502 ist eine Kamera 505 zur Aufnahme von stehenden Bildern mit einer entsprechenden Lichtquelle positioniert.

| **Bezugszeichenliste** | |
|---|---|
| 101 | Vorrichtung |
| 102 | Materialbahn |
| 103 | Umlenkrolle |
| 104 | Umlenkrolle |
| 105 | Endlosband |
| 106 | Antrieb |
| 107 | Kamera |
| 201 | Vorrichtung |
| 202 | Materialbahn |
| 203 | Gestell |
| 204 | Platte |
| 205 | Antrieb |
| 206 | Kamera |
| 301 | Vorrichtung |
| 302 | Materialbahn |
| 303 | Kammer |
| 304 | Pumpe |
| 305 | Kamera |
| 401 | Vorrichtung |
| 402 | Materialbahn |
| 403 | Platte |
| 404 | Peltier-Element |
| 405 | Kamera |
| 501 | Vorrichtung |
| 502 | Materialbahn |
| 503 | Platte |
| 504 | Anschlüsse |
| 505 | Kamera |

## Patentansprüche

1. Vorrichtung (101, 201, 301, 401, 501) zur Beobachtung einer laufenden und bedruckten Materialbahn während eines Druckprozesses, mit einer auf der Vorderseite der Materialbahn (102, 202, 302, 402, 502) positionierten Lichtquelle zur Beleuchtung eines Beobachtungsabschnitts der Materialbahn,
mit einer auf der Vorderseite der Materialbahn positionierten Kamera (107, 206, 305, 405, 505) zur Aufnahme von stehenden Bildern der Materialbahn innerhalb des Beobachtungsabschnitts, und
mit einer auf der Rückseite der Materialbahn und innerhalb des Beobachtungsabschnitts der Materialbahn positionierten lichtstreuenden Oberfläche (105, 204, 303, 403, 503)
**dadurch gekennzeichnet,**
**dass** die lichtstreuende Oberfläche Elemente (106, 205, 304, 404, 504) zur Steuerung der Farbe der lichtstreuenden Oberfläche aufweist, so dass die Farbe der lichtstreuenden Oberfläche geändert werden kann.

2. Vorrichtung nach Anspruch 1, **dadurch gekennzeichnet, dass** eine Steuereinheit vorgesehen ist, die die von der Kamera (107, 206, 305, 405, 505) erzeugten Bilder zur Kontrollierung der Qualität der Materialbahn auswertet.

3. Vorrichtung nach einem der Ansprüche 1 - 2, **dadurch gekennzeichnet, dass** die lichtstreuende Oberfläche aus einem mehrfarbigen Endlosband (105) besteht, das zwischen zwei Umlenkwalzen (103, 104) geführt wird.

4. Vorrichtung nach einem der Ansprüche 1 - 2, **dadurch gekennzeichnet, dass** die lichtstreuende Oberfläche aus einer schwenkbaren Platte (204) mit zwei verschieden farbigen Seiten besteht.

5. Vorrichtung nach einem der Ansprüche 1 - 2, **dadurch gekennzeichnet, dass** die lichtstreuende Oberfläche von einer farbigen Flüssigkeit erzeugt wird, die in eine durchsichtige Kammer (303) einfüllbar ist.

6. Vorrichtung nach einem der Ansprüche 1 - 2, **dadurch gekennzeichnet, dass** die lichtstreuende Oberfläche (403) aus einer Thermofarbbeschichtung besteht, deren Farbe in Abhängigkeit von der Temperatur veränderbar ist.

7. Vorrichtung nach einem der Ansprüche 1 - 2, **dadurch gekennzeichnet, dass** die lichtstreuende Oberfläche (503) aus einem schaltbaren LC-Glas und einer dahinter liegenden Farboberfläche besteht.

8. Druckmaschine, insbesondere Tiefdruckmaschine, mit einer Vorrichtung (101, 201, 301, 401, 501) zur Beobachtung einer laufenden Materialbahn nach einem der Ansprüche 1 - 7.

## Claims

1. A device (101, 201, 301, 401, 501) for observing a running and printed material web during the printing process,
having a light source which is positioned on the front side of the material web (102, 202, 302, 402, 502) for illuminating an observing section of the material web,
having a camera (107, 206, 305, 405, 505) which is positioned on the front side of the material web for recording still images of the material web within the observing section, and
having a light-scattering surface (105, 204, 303, 403, 503) which is positioned on the rear side of the material web and within the observing section of the material web
**characterized in**
**that** the light-scattering surface has elements (106, 205, 304, 404, 504) for controlling the color of the light-scattering surface, so that the color of the light-scattering surface can be changed.

2. A device according to Claim 1, **characterized in that** a control unit is provided, which evaluates the images generated by the camera (107, 206, 305, 405, 505) for controlling the quality of the material web.

3. A device according to any one of Claims 1 - 2, **characterized in that** the light-scattering surface consists of a multi-color endless band (105), which is guided between two deflection rollers (103, 104).

4. A device according to any one of Claims 1 - 2, **characterized in that** the light-scattering surface consists of a pivotable plate (204) with two differently colored sides.

5. A device according to any one of Claims 1 - 2, **characterized in that** the light-scattering surface is generated by a colored liquid, which can be filled into a transparent chamber (303).

6. A device according to any one of Claims 1 - 2, **characterized in that** the light-scattering surface (403) consists of a thermo-coior coating, the color of which can be changed depending on the temperature.

7. A device according to any one of Claims 1 - 2, **characterized in that** the light-scattering surface (503) consists of a switchable LC glass and a color surface lying behind it.

8. A printing machine, in particular, an intaglio printing machine, having a device (101, 201, 301, 401, 501) for observing a running material web according to any one of Claims 1 - 7.

## Revendications

1. Dispositif (101, 201, 301, 401, 501) pour la surveillance d'une bande de matériau continue et imprimée pendant un processus d'impression,
avec une source de lumière, située à l'avant de la bande de matériau (102, 202, 302, 402, 502) pour l'éclairage d'une portion surveillée de la bande de matériau,
avec une caméra (107, 206, 305, 405, 505) positionnée à l'avant de la bande de matériau pour la prise d'images fixes de la bande de matériau à l'intérieur de la portion surveillée et
avec une surface de diffusion de la lumière (105, 204, 303, 403, 503) positionnée à l'arrière de la bande de matériau et à l'intérieur de la portion surveillée de la bande de matériau,
**caractérisé en ce que**
la surface de diffusion de lumière comprend des éléments (106, 205, 304, 404, 504) pour le contrôle de la couleur de la surface de diffusion de lumière, de façon à ce que la couleur de la surface de diffusion de lumière puisse être modifiée.

2. Dispositif selon la revendication 1, **caractérisé en ce qu'**une unité de commande est prévue, qui analyse les images générées par la caméra (107, 206, 305, 405, 505) pour le contrôle de la qualité de la bande de matériau.

3. Dispositif selon l'une des revendications 1 à 2, **caractérisé en ce que** la surface de diffusion de lumière est constitué d'une bande sans fin multicolore (105) qui est guidée entre deux rouleaux de renvoi (103, 104).

4. Dispositif selon l'une des revendications 1 à 2, **caractérisé en ce que** la surface de diffusion de lumière est constitué d'une plaque pivotante (204) avec deux faces de couleurs différentes.

5. Dispositif selon l'une des revendications 1 à 2, **caractérisé en ce que** la surface de diffusion de lumière est produite par un liquide coloré qui peut être introduit dans une chambre transparente (303).

6. Dispositif selon l'une des revendications 1 à 2, **caractérisé en ce que** la surface de diffusion de lumière (403) est constituée d'un revêtement thermique coloré dont la couleur varie en fonction de la température.

7. Dispositif selon l'une des revendications 1 à 2, **caractérisé en ce que** la surface de diffusion de lumière (503) est constituée d'un verre LC et d'une surface colorée se trouvant derrière.

8. Machine d'impression, plus particulièrement machine d'impression à rotogravure, avec un dispositif (101, 201, 301, 401, 501) pour la surveillance d'une bande de matériau continue selon l'une des revendications 1 à 7.
